# EUROPÄISCHE PATENTSCHRIFT

(11) **EP 1 550 245 B1**
(45) Veröffentlichungstag und Bekanntmachung des Hinweises auf die Patenterteilung: **03.12.2008**
(21) Anmeldenummer: 03758582.5
(22) Anmeldetag: 06.10.2003
(51) Int. Cl.: H04B 10/08

(54) **OPTISCHES ÜBERTRAGUNGSSYSTEM UND VERFAHREN ZUM UNTERDRÜCKEN UNGESCHÜTZTER OPTISCHER EMISSION DURCH ÜBERTRAGUNG EINES EMPFÄNGERSPEZIFISCHEN KODIERTEN PRÜFSIGNALS**
OPTICAL COMMUNICATION SYSTEM AND METHOD TO AVOID UNPROTECTED OPTICAL TARNSMISSION USING A CODED RECEIVER-SPECIFIC CONTROLSIGNAL
SYSTÈME DE COMMUNICATION OPTIQUE ET MÉTHODE POUR ÉVITER LA TRANSMISSION NON-PROTEGÉE PAR L'UTILISATION D'UN SIGNAL DE CONTÔLE CODÉ SPECIFIQUE AU RECEPTEUR

(30) Priorität: 07.10.2002 DE 10246612
(43) Veröffentlichungstag der Anmeldung: 06.07.2005
(73) Patentinhaber: Ericsson AB, Stockholm (SE)
(72) Erfinder: FISCHER, Jurgen, 71522 Backnang (DE); WOLF, Willi, 71522 Backnang (DE)
(74) Vertreter: Stasiewski, Piotr Grzegorz
(86) Internationale Anmeldenummer: PCT/IB2003/004996
(87) Internationale Veröffentlichungsnummer: WO 2004/032382

(56) Entgegenhaltungen:
- EP-A- 0 981 212
- WO-A-99/48229
- DE-A- 3 147 555
- US-A- 5 966 206

## Beschreibung

Die vorliegende Erfindung betrifft ein optisches, Nachrichten verarbeitendes System mit einer Mehrzahl von optischen Sendern und Empfängern, die jeweils mit Anschlüssen für austauschbare Wellenleiter ausgestattet sind, diese Sender bzw. Empfänger und ein Verfahren zu ihrem Betrieb. Die Sender derartiger Systeme erzeugen im Betrieb intensive, meist kohärente Strahlung, die nicht ins Freie gelangen darf, da sie zu Augenverletzungen führen kann.

Es sind daher Sicherheitseinrichtungen entwickelt worden, die die Emission eines Nachrichtensignals aus einem solchen Sender unterdrücken, wenn dieser nicht über einen Wellenleiter mit einem Empfänger verbunden ist. So ist es z. B. bekannt, zum Verbinden der Sender und Empfänger eines solchen Systems Hybridkabel zu verwenden, die zum einen einen Wellenleiter für die Übertragung des Nachrichtensignals und zum anderen einen Freigabesignalleiter aufweisen, über den ein Freigabesignal vom Empfänger zum Sender befördert werden kann, das letzterem das Angeschlossensein des Empfängers anzeigt. Sicherheitsschaltungen am Sender sorgen dafür, das dieser das Nachrichtensignal nur erzeugt, wenn das Freigabesignal anliegt.

Auf diese Weise lässt sich zwar die ungeschützte Emission des Nachrichtensignals ins Freie vermeiden, doch ist die Verkabelung eines solchen Systems aufwendig und fehlerträchtig, wenn eine große Zahl von Sendern und Empfängern miteinander verbunden werden muss. Außerdem sind die Hybridkabel und ihre Steckverbinder aufwendiger und teurer und auch empfindlicher als einfache rein optische Kabel. Es wäre daher an sich wünschenswert, in einem optischen Nachrichtübertragungssystem auf die Hybridkabel verzichten zu können. Verkabelt man jedoch die Wellenleiter und die Freigabesignalleitungen zwischen den einzelnen Sendern und Empfängern des Nachrichtenübertragungssystems unabhängig voneinander, so kann es leicht zu Fehlpaarungen kommen, bei denen ein Empfänger durch ein optisches Kabel mit einem Sender verbunden ist, mit dem er eigentlich nicht verbunden werden sollte, und mit dem seine Freigabesignalleitung nicht verbunden ist. Wenn der Empfänger in einer solchen Situation ein Freigabesignal liefert, wird dadurch die Emission des Nachrichtensignals an einem anderen Sender freigeschaltet, der dann möglicherweise ins Freie emittiert.

Aus der DE-A1-3147555 ist eine Schaltungsanordnung zur Überwachung einer optischen Übertragungsstrecke bekannt, die in wenigstens einem Streckenabschnitt eine Nachrichtenübertragungseinrichtung mit Rückmeldekanal aufweist, die eine Nachrichtenstelle mit einem optischen Sender, einem optischen Signalübertragungskanal und eine wietere Nachrichtenstelle mit einem Optischen Empfänger enthält. Der Sender ist über den Rückmeldekanal derart steuerbar, daß er bei fehlerhafter Übertragungsstrecke ein Prüfsignal mit für die Augen unschädlicher Strahlungsdichte abgibt. Der Sender ist derart steuerbar, daß er im einschaltsignalfreien Zustand gesperrt und durch die Einschaltsignale entsperrt wird. Dem Sender ist eine Schaltungsanordnung zur automatischen Ersatzsignaleinschaltung bei Nutzsignalausfall vorgeschaltet. Das Rückmeldesignal wird vom optischen Empfänger nur während der Zeitabschnitte abgegeben, in denen ein Nutzsignal oder ein Ersatzsignal empfangen wird.

Aufgabe der vorliegenden Erfindung ist, ein Nachrichtenübertragungssystem, Sender und Empfänger für ein Nachrichtenübertragungssystem sowie ein Verfahren zum Unterdrücken von ungeschützter Emission in einem solchen System anzugeben, die einen wirksamen Schutz auch bei unabhängiger Verkabelung der Wel-lenleiter und Freigabesignalleitungen gewährleisten.

Die Aufgabe wird gelöst durch ein Nachrichtenübertragungssystem gemäß Anspruch 1, einen Sender gemäß Anspruch 13, einen Empfänger gemäß Anspruch 14 und ein Verfahren zum Unterdrücken von ungeschützter Emission gemäß Anspruch 15. Indem vor dem Freischalten des Nachrichtensignals ein kodiertes, d.h. für jeden Empfänger spezifisches Prüfsignal übertragen wird, kann zweifelsfrei festgestellt werden, ob die über einen Wellenleiter miteinander verbundenen Sender und Empfänger tatsächlich zusammen gehören. Nur wenn dies der Fall ist, wird das Nachrichtensignal freigeschaltet.

Es wäre denkbar, an jedem Sender einen Speicher zum Speichern einer Beschreibung des für den zugeordneten Empfänger spezifischen Prüfsignals vorzusehen. Die Realisierung des Systems ist jedoch einfacher, wenn statt dessen Mittel zum Übertragen einer Beschreibung des für einen Empfänger spezifischen Prüfsignals von dem Empfänger an den zugeordneten Sender vorgesehen werden. Bei diesen Mitteln zum Übertragen handelt es sich vorzugsweise um die Freigabesteuerleitung selbst; auf diese Weise können Fehler bei der Verdrahtung der Freigabesteuerleitungen ausgeschlossen werden.

Einer ersten Ausgestaltung der Erfindung zufolge ist jedem Empfänger ein Speicher für die Beschreibung seines Prüfsignals zugeordnet. Dieser Speicher, der vorzugsweise unmittelbar in den Empfänger integriert ist, kann vom Hersteller des Systems mit einem systemweit eindeutigen Wert fest vorbelegt sein. Eine bessere Erweiterbarkeit des Systems um zusätzliche Sender wird allerdings erreicht, wenn die gespeicherte Beschreibung nicht nur systemweit, sondern für alle von dem Hersteller produzierten oder kompatiblen Empfänger eindeutig ist. Die dafür erforderliche große Bitzahl verlängert allerdings die zu der Durchführung des erfindungsgemäßen Verfahrens benötigte Zeit. Dies lässt sich vermeiden, wenn die Beschreibungen des Prüfsignals nicht dauerhaft vorgegeben sind, sondern von einer zentralen Instanz des Systems dynamisch eindeutig vergeben werden.

Eine zweite Ausgestaltung verwendet einen Zufallsgenerator zum zufallsgesteuerten Erzeugen der Beschreibung des Prüfsignals für jeden Empfänger.

Eine dritten Ausgestaltung der Erfindung zufolge kann die Eindeutigkeit der Prüfsignale auch dadurch gewährleistet werden, das eine zentrale Instanz jedem Empfänger einen Zeitpunkt zuweist, an dem dieser die Übertragung des Prüfsignals vom zugeordneten Sender verlangen darf.

Eine besonders einfache Beschreibung des Prüfsignals ist eine digitale Zahl, aus der das Prüfsignal auf einfache Weise erzeugt werden kann durch Codieren der Zahl in einem optischen Signal nach einem beliebigen Codierverfahren, und die in geeignet codierter Form auf dem Wellenleiter übertragen wird. Eine andere Möglichkeit ist, dass die Beschreibung des Prüfsignals eine Mehrzahl von Zeitpunkten definiert, an denen das Prüfsignal seinen Pegel wechselt.

Um das Freigabesteuersignal und die Beschreibung des Prüfsignals auf der Freigabesteuerleitung zu übertragen, genügt es, wenn diese zwei Pegel annehmen kann. Einer dieser Pegel entspricht, wenn er dauernd anliegt, dem Freigabesteuersignal; während die Beschreibung des Prüfsignals übertragen wird, darf die Freigabesteuerleitung diesen zweiten Pegel nicht so lange kontinuierlich annehmen, dass dies vom Sender als Freigabesignal aufgefasst werden kann. Selbstverständlich kommt aber auch eine Freigabesignalleitung in Betracht, bei der sich der Freigabesignalpegel von den zur Übertragung der Beschreibung eingesetzten wenigstens zwei Signalpegeln unterscheidet.

Aus Sicherheitsgründen sollte jeder Sender das Prüfsignal mit einer geringeren mittleren Leistung senden als das Nachrichtensignal. Dies kann z. B. dadurch erreicht werden, dass das Prüfsignal sich aus kurzen Pulsen zusammensetzt, die einen großen zeitlichen Abstand haben und deren Pulsenergie nicht ausreicht, um Augenverletzungen zu bewirken. Einer bevorzugten Ausgestaltung zufolge ist das Prüfsignal inkohärent und daher für die Augen ungefährlich, wohingegen das Nachrichtensignal die für die Erzielung hoher Übertragungsraten erforderliche Kohärenz aufweist.

Dies ist insbesondere auf einfache Weise erreichbar mit einem Sender, der einen zweistufigen Aufbau mit einem Laser und einem zwischen den Laser und den Wellenleiteranschluss geschalteten Verstärker aufweist. Wenn der Laser nur bei Vorliegen des Freigabesignals betreibbar ist, kann als Prüfsignal lediglich inkohärente spontane Emission des Verstärkers erzeugt werden.

Eine bevorzugte Anwendung der Erfindung sind optische Vermittlungssysteme für die Fernmeldetechnik, bei denen die Sender und Empfänger auf einer an einer Backplane montierten Leiterplatte angebracht sind, und die Freigabeleitungen über die Backplane geführt sind.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: eine schematische Darstellung eines optischen Vermittlungssystems mit einer Mehrzahl von Sendern und Empfängern gemäß der vorliegenden Erfindung;
- Fig. 2: eine schematische Darstellung eines Empfängers eines solchen Systems gemäß einer ersten Ausgestaltung;
- Fig. 3: den zeitlichen Verlauf von Signalen auf der Freigabeleitung, dem Wellenleiter und innerhalb des Empfängers aus Fig. 2;
- Fig. 4: eine zweite Ausgestaltung eines erfindungsgemäßen Empfängers;
- Fig. 5: den zeitlichen Verlauf von Signalen auf der Freigabeleitung, dem Wellenleiter und innerhalb des Empfängers aus Fig. 4; und
- Fig. 6: eine dritte Ausgestaltung eines erfindungsgemäßen Empfängers.

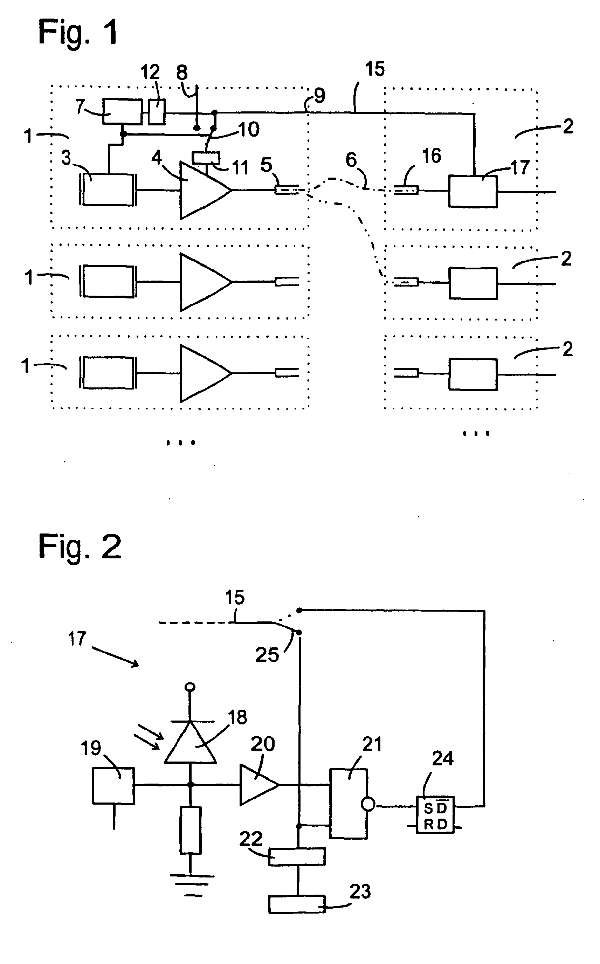

Fig. 1 zeigt schematisch eine Anordnung von mehreren optischen Sendern 1 und Empfängern 2 in einer optischen Vermittlungsstation eines Fernmeldenetzwerks. Die Sender 1 und Empfänger 2 befinden sich auf Steckkarten, die in einer gemeinsamen Backplane montiert sind. Sie haben jeweils identischen Aufbau, der der Fig. allerdings nur für einen Sender 1 und einen Empfänger 2 detailliert gezeigt ist.

Die optischen Komponenten jedes Senders 1 sind ein Laserresonator 3, insbesondere in Form einer Laserdiode, ein optischer Verstärker 4, der mit der Laserdiode 3 auf einem gemeinsamen Halbleitersubstrat integriert ist und durch den hindurch ein Wellenleiter von der Laserdiode 3 zu einem optischen Ausgangsanschluss 5 des Senders 1 führt. Der optische Ausgangsanschluss 5 ist ein Steckverbinder, der mit einem komplementären Verbinder eines optischen Verbindungskabels 6 zusammensteckbar ist.

Der Sender hat einen Eingang 8 für ein elektrisches Nachrichtensignal und einen Eingang 9 für ein Freigabesignal. Beide Eingänge sind über einen Schalter 10 wahlweise mit einem Steuereingang einer Treiberschaltung 11 verbunden, die die Energieversorgung des optischen Verstärkers 4 regelt. Der Freigabesignaleingang 9 ist darüber hinaus über eine Verzögerungsschaltung 12 mit einem Steuereingang einer Treiberschaltung 7 verbunden, die die Energieversorgung der Laserdiode 3 regelt.

Am Freigabesignaleingang 9 können zwei verschiedene Signalpegel, als 0 und 1 bezeichnet, anliegen. In der gezeigten Stellung des Schalters 10 steuern diese Pegel über die Treiberschaltung 11 die Energieversorgung des optischen Verstärkers 4. Die Verzögerungsschaltung 12 ist ausgelegt, um bei Inbetriebnahme des Senders 1 zunächst den Pegel 0 an die Treiberschaltung 7 auszugeben und erst dann auf den Pegel 1 umzuschalten, wenn dieser über eine vorgegebene Zeitspanne T hinweg kontinuierlich an ihrem Eingang angelegen hat. Solange die Verzögerungsschaltung den Ausgangspegel 0 liefert, bleibt die Laserdiode 3 ausgeschaltet. Wenn die Laserdiode 3 ausgeschaltet ist, der optische Verstärker 4 aber mit Energie versorgt wird, kann am optischen Ausgangsanschluss 5 des Senders nur inkohärentes Licht aus spontaner Emission des Verstärkers 4 erscheinen. Diese spontane Emission kann zwei verschiedene Leistungspegel annehmen, je nach Signalpegel 0 oder 1 am Freigabesignaleingang 9.

Die am Freigabesignaleingang 9 anliegenden Signalpegel werden von einem dem Sender 1 zugeordneten Empfänger 2 erzeugt, der mit diesem über eine Freigabesignalleitung 15 verbunden ist. Diese Freigabesignalleitung 15 ist durch eine Leiterbahn auf der die Sender 1 und Empfänger 2 verbindenden Backplane gebildet.

Ein Empfänger 2 umfasst jeweils einen optischen Eingangsanschluss 16, an den ein optisches Verbindungskabel 6 anschließbar ist, und eine Auswertungsschaltung 17, für deren Aufbau ein ersten Beispiel in Fig. 2 gegeben ist.

Eine Fotodiode 18 der Auswertungsschaltung 17 empfängt ein am optischen Eingangsanschluss 16 eintreffendes Lichtsignal und wandelt dieses in ein elektrisches Signal. Eine an die Fotodiode 18 angeschlossene Decodierschaltung 19 zum Extrahieren und Decodieren eines dem eintreffenden Lichtsignal eventuell aufmodulierten Nachrichtensignals ist bekannt und wird nicht weiter beschrieben. An die Fotodiode 18 ist ferner ein Verstärker 20 angeschlossen, der ausgelegt ist, um bei Eintreffen eines schwachen inkohärenten Lichtsignals, das einem Betrieb des optischen Verstärkers 4 bei einem Eingangspegel 0 seiner Treiberschaltung 11 entspricht, einen Ausgangspegel von 0 zu liefern und bei einem starken inkohärenten Signal, das einem Betrieb des optischen Verstärkers 4 bei einem Eingangspegel von 1 seiner Treiberschaltung 11 entspricht, einen Ausgangspegel von 1 zu liefern. Der Ausgang dieses Verstärkers 20 ist mit einem Eingang eines NOR-Gatters 21 verbunden. An den zweiten Eingang des NOR-Gatters 21 ist ein mit einem Register 23 verbundener Parallel-Seriell-Wandler 22 angeschlossen. Dieser Wandler 22 ist durch einen Anstieg der von der Fotodiode 18 erfassten Lichtleistung triggerbar, wie er insbesondere auftritt, wenn über ein optisches Verbindungskabel 6 eine Verbindung zwischen der Fotodiode 18 und einem spontane Emission mit geringer Leistung sendenden Sender 1 auftritt.

D.h., wenn über ein Verbindungskabel 6 eine optische Verbindung zwischen dem Empfänger 2 und einem beliebigen Sender 1 hergestellt worden ist oder wenn die Vermittlungsstation in Betrieb genommen und mit Spannung versorgt wird, beginnt der Wandler 22, den im Register 23 eingetragenen Datenwert mit einer vorgegebenen, niedrigen Frequenz zu serialisieren. Diese Frequenz kann im Bereich von einigen Hertz bis maximal einigen Kilohertz liegen. Sie ist so gewählt, dass die Serialisierung des gesamten im Register 21 eingetragenen Werts nicht länger dauert als die Verzögerungszeitspanne T der Verzögerungsschaltung 12. Der serialisierte Datenwert erreicht so den zweiten Eingang des NOR-Gatters 21 und wird gleichzeitig auf die Freigabesignalleitung 15 gegeben. So steuert der serialisierte Datenwert die Stärke der spontanen Emission im optischen Verstärker 4 desjenigen Senders, der mit dem Empfänger 2 über die Freigabesignalleitung 15 verbunden ist. Wenn dies der gleiche ist, der auch über das optische Verbindungskabel 6 mit dem Empfänger 2 verbunden wurde, so ist, von Laufzeitverzögerungen abgesehen, das Ausgangssignal des Verstärkers 20 identisch mit dem des Parallel-Seriell-Wandlers 22, und das Ausgangssignal des NOR-Gatters 21 ist konstant 0. Ein an den Ausgang des NOR-Gatters 21 angeschlossenes RS-Flipflop 24 wird nicht gesetzt, und sein *D̅*-Ausgang bleibt konstant auf dem Wert 1. Nach Abschluss der Serialisierung wird ein Schalter 25 umgeschaltet, um den *D̅*-Ausgang des Flipflops 24 anstelle des Wandlers 22 mit der Freigabesignalleitung 15 zu verbinden. Der Wert auf der Freigabesignalleitung 15 bleibt so kontinuierlich auf 1, so dass nach Ablauf der Zeitspanne T die Treiberschaltung 7 die Laserdiode 3 einschaltet und gleichzeitig den Schalter 10 umlegt, um die Treiberschaltung 11 des optischen Verstärkers 4 mit dem Nachrichtensignaleingang 8 zu verbinden.

Wenn die optischen Verbindungskabel 6 zwischen den verschiedenen Sendern 1 und Empfängern 2 nacheinander von Hand gesteckt werden, so wird im Allgemeinen, wenn eine optische Verbindung falsch gesteckt wird, die Leistung der spontanen Emission des optisch mit dem Empfänger 2 verbundenen Senders 1 konstant sein, und eine Nichtübereinstimmung zwischen den Eingangssignalen des NOR-Gatters 21 tritt auf, sobald das vom Parallel-Seriell-Wandler 22 gelieferte Ausgangssignal zum ersten Mal seinen Pegel wechselt. Denkbar ist aber insbesondere auch, dass nach einer Betriebsunterbrechung der Vermittlungsstation, die die Sender 1 und Empfänger 2 enthält, sämtliche optischen Verbindungen gleichzeitig getestet werden, da nicht ausgeschlossen ist, dass diese während der Auszeit der Station verändert worden sind. In diesem Falle findet eine Vielzahl von Prüfvorgängen gleichzeitig statt.

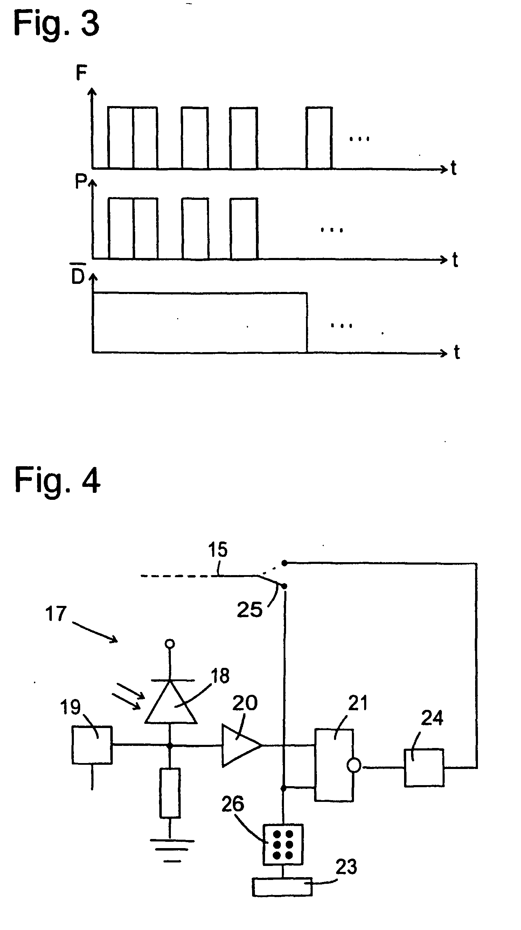

Fig. 3 zeigt ein Beispiel für einen möglichen zeitlichen Verlauf der Pegel F auf der Freigabesignalleitung 15, der Pegel P der spontanen Emission auf dem Verbindungskabel 6 und des *D̅*-Ausgangssignals des Flipflops 24. Solange die Signalpegel, die der Empfänger 2 auf seiner Freigabesignalleitung 15 sendet, zufällig mit denjenigen übereinstimmen, die der optisch mit ihm verbundene Sender von einem anderen Empfänger bekommt, bleibt der *D̅*-Ausgang des Flipflops 24 auf dem Wert 1; sobald sich aber ein Unterschied in den Pegeln ergibt, (der unvermeidlich ist, wenn der Datenwert im Register 23 jedes Empfängers für den Empfänger charakteristisch ist), wird das Flipflop 24 gesetzt, der *D̅*-Ausgang geht auf 0, und der betreffende Sender bleibt nach Abschluss der Prüfung ausgeschaltet.

Bei der hier betrachteten einfachen Ausgestaltung der Erfindung erhält der Sender 1 vom Empfänger 2 über die Freigabesignalleitung 15 eine Beschreibung der Form des Prüfsignals, das er erzeugen muss, um sich gegenüber dem Empfänger 2 als der tatsächlich zum Verbinden mit ihm vorgesehenen Sender 1 aufzuweisen, einfach in Form einer Folge von Signalpegeln, die der Sender 1 lediglich zeitgleich mit ihrem Eintreffen am Sender 1 von der elektrischen in die optische Form umwandeln muss, um das auf dem optischen Verbindungskabel 6 zu übertragende Prüfsignal zu erhalten. Selbstverständlich kann anstelle einer solchen "direkten" Beschreibung des zu erzeugenden Prüfsignals auch eine in beliebiger geeigneter Form kodierte Beschreibung verwendet werden. Dies kann insbesondere dann zweckmäßig sein, wenn nicht jede einzelne Freigabesignalleitung 15 als eine eigene Leiterbahn auf der Backplane realisiert ist, sondern die mehreren Leitungen sich Leiterbahnen in Zeitmultiplex teilen. Eine solche Lösung kann unter anderem wünschenswert sein, weil der Fortfall einer festen Verdrahtung der Freigabesignalleitungen eine flexiblere Zuordnung von Empfängern und Sendern zueinander ermöglicht. Bei einer solchen Lösung besteht im Allgemeinen keine direkte Entsprechung mehr zwischen auf der Freigabesignalleitung 15 übertragenen Pegeln und dem Verlauf des vom Sender 1 erzeugten optischen Prüfsignals, und die auf der Freigabesignalleitung 15 übermittelte Beschreibung des Prüfsignals kann in beliebiger geeigneter Weise kodiert sein.

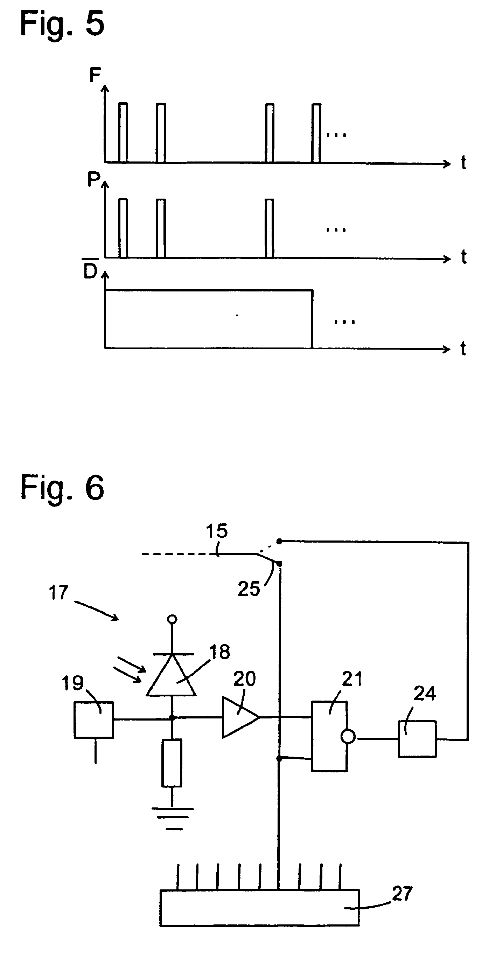

Fig. 4 zeigt eine zweite Ausgestaltung eines erfindungsgemäßen Empfängers 2. Er unterscheidet sich von der Ausgestaltung der Fig. 2 dadurch, dass der Parallel-Seriell-Wandler durch einen Pseudo-Zufallsgenerator 26 ersetzt ist, der anhand des Inhalts des Registers 23 eine Zufallszahlfolge erzeugt und anhand der erzeugten Werte mit vorgegebener geringer Wahrscheinlichkeit festlegt, ob er an seinem Ausgang einen kurzen Impuls liefert oder nicht. Diese Ausgestaltung hat den Vorteil, dass sie mit einem Sender mit einfacherer Struktur als der in Fig. 1 gezeigten zusammenarbeiten kann, bei dem kein optischer Verstärker vorhanden ist oder der Laser nicht getrennt vom Verstärker ein- und Ausgeschaltet werden kann. Indem die Pulse ausreichend kurz eingestellt werden und die Wahrscheinlichkeit für ihre Erzeugung niedrig genug gemacht wird, können der Energiegehalt eines Pulses und die mittlere Leistung des vom Sender 1 gelieferten Pulssignals so niedrig gemacht werden, dass trotz Kohärenz der Pulse eine Augengefährdung ausgeschlossen werden kann. Die schematisch in Fig. 5 gezeigt Koinzidenzprüfung läuft in ähnlicher Weise ab wie im Falle der Fig. 3: Sobald das am Empfänger 2 eintreffende optische Prüfsignal einen von dem Zufallsgenerator 26 spezifizierten Impuls nicht enthält (oder wenn es einen zusätzlichen, nicht spezifizierten Impuls enthält), wird das RS-Flipflop 24 gesetzt, und die optische Verbindung zwischen Sender und Empfänger ist als fehlerhaft identifiziert.

Bei einer in Fig. 6 dargestellten dritten Ausgestaltung des Empfängers 2 sind der Wandler 22 und das Register 23 durch eine Steuerschaltung 27 ersetzt, die mit allen Empfängern 2 der Vermittlungsstation verbunden ist, und im Falle einer Überprüfung der optischen Verbindungskabel 6 von allen Empfängern 2, die eine Prüfung durchzuführen haben, eine Anforderung zu einer Genehmigung einer solchen Prüfung empfängt. Die Steuerschaltung 27 verteilt diese Genehmigungen nacheinander. So ist sichergestellt, dass zu jedem Zeitpunkt nur ein Empfänger der Station überprüft, ob er mit dem Sender, mit dem er über die Freigabesignalleitung verbunden ist, auch optisch verbunden ist. In diesem Fall genügt es, dass die Prüfsignalbeschreibung, die der Empfänger an den Sender liefert, den Zeitpunkt eines einzigen Impulses spezifiziert. Wird dieser Impuls im Prüfsignal empfangen, ist die Verbindung korrekt, bleibt der Impuls aus, so ist sie fehlerhaft.

## Patentansprüche

1. Optisches Nachrichtenübertragungssystem mit einer Mehrzahl von optischen Sendern (1) und Empfängern (2), die jeweils mit Anschlüssen (5, 16) für austauschbare Wellenleiter (6) ausgestattet sind, wobei jedem optischen Sender (1) ein Eingang (9) zum Empfangen eines Freigabesignals zugeordnet ist und der Sender (1) eingerichtet ist, ein optisches Nachrichtensignal je nach Status des Freigabesignals zu erzeugen oder nicht zu erzeugen, und jedem optischen Empfänger (2) ein Signalgeber (21, 24) zum Erzeugen eines solchen Freigabesignals (*D̅*=1) zugeordnet ist, dessen Status angibt, ob der Empfänger (2) über einen Wellenleiter (6) mit einem Sender (1) verbunden ist oder nicht,
**dadurch gekennzeichnet, dass**
jeder Signalgeber (21, 24) mit genau einem Freigabeeingang (9) über eine von den Wellenleitern (6) getrennt geführte Freigabesteuerleitung (15) verbunden ist und eingerichtet ist, das Freigabesignal (*D̅*=1) nur zu erzeugen, wenn zuvor ein für den jeweiligen Empfänger (2) spezifisches Prüfsignal an dessen Wellenleiter-Anschluss (16) empfangen worden ist, und dass es Mittel (15) zum Übertragen einer Beschreibung des für einen Empfänger (2) spezifischen Prüfsignals an den zugeordneten Sender (1) umfasst.

2. Optisches Nachrichtenübertragungssystem nach Anspruch 1, **dadurch gekennzeichnet, dass** jedem Empfänger (2) ein Speicher (23) für die Beschreibung seines Prüfsignals zugeordnet ist.

3. Optisches Nachrichtenübertragungssystem nach Anspruch 1, **dadurch gekennzeichnet, dass** jedem Empfänger (2) ein Zufallsgenerator (26) zum zufallsgesteuerten Erzeugen der Beschreibung seines Prüfsignals zugeordnet ist.

4. Optisches Übertragungssystem nach Anspruch 1, **dadurch gekennzeichnet dass** es eine zentrale Instanz (27) zum Zuweisen einer für jeden Empfänger (2) spezifischen Prüfsignalbeschreibung an jedem Empfänger umfasst.

5. Optisches Nachrichtenübertragungssystem nach einem der Ansprüche 1 bis 4, **dadurch gekennzeichnet, dass** das Mittel zum Übertragen einer Beschreibung des Prüfsignals die Freigabesteuerleitung (15) ist.

6. Optisches Nachrichtenübertragungssystem nach Anspruch 5, **dadurch gekennzeichnet, dass** die Freigabesteuerleitung genau zwei Pegel annehmen kann.

7. Optisches Nachrichtenübertragungssystem nach einem der Ansprüche 1 bis 6, **dadurch gekennzeichnet, dass** das Prüfsignal durch eine digitale Zahl beschreibbar ist.

8. Optisches Nachrichtenübertragungssystem nach Anspruch 7, **dadurch gekennzeichnet, dass** der Sender (1) einen Codierer (11, 4) zum Codieren der digitalen Zahl in das Prüfsignal aufweist und der Empfänger (2) einen Decodierer (20, 21) zum Extrahieren der im Prüfsignal codierten Zahl aufweist.

9. Optisches Nachrichtenübertragungssystem nach einem der Ansprüche 1 bis 5, **dadurch gekennzeichnet, dass** das Prüfsignal beschreibbar ist durch wenigstens einen Zeitpunkt, an dem es seinen Pegel wechselt.

10. Optisches Nachrichtenübertragungssystem nach einem der vorhergehenden Ansprüche, **dadurch gekennzeichnet, dass** jeder Sender (1) das Prüfsignal mit einer geringeren mittleren Leistung sendet als das Nachrichtensignal.

11. Optisches Nachrichtenübertragungssystem nach einem der vorhergehenden Ansprüche, **dadurch gekennzeichnet, dass** jeder Sender (1) einen Laser (3) und einen zwischen den Laser (3) und den Wellenleiteranschluss (5) des Senders (1) geschalteten Verstärker (4) aufweist, und dass der Laser nur bei Anliegen des Freigabesignals (*D̅*=1) betreibbar ist.

12. Optisches Nachrichtenübertragungssystem nach einem der vorhergehenden Ansprüche, **dadurch gekennzeichnet, dass** die Sender (1) und Empfänger (2) auf an einer Backplane montierten Leiterplatten angebracht sind, und dass die Freigabeleitungen (15) über die Backplane geführt sind.

13. Sender für ein optisches Nachrichtenübertragungssystem, insbesondere nach einen der vorhergehenden Ansprüche, mit einem optischen Ausgangsanschluss (5), einem Freigabesignaleingang (9) und einer modulierbaren Strahlungsquelle (3, 4) zum Liefern eines optischen Nachrichtensignals an dem optischen Ausgangsanschluss (5), wenn an dem Freigabesignaleingang (9) des Senders (1) ein Freigabesignal (*D̅*=1) anliegt, wobei die Strahlungsquelle (3, 4) in der Lage ist, bei Nichtanliegen des Freigabesignals (*D̅*=1) ein codiertes optisches Prüfsignal am Ausgangsanschluss (5) auszugeben, **dadurch gekennzeichnet, daß** die Strahlungsquelle in der Lage ist ein für einen zugeordneten Empfänger spezifisches, codiertes optisches Signals gemäß einer an den Sender übertragenen Beschreibung zu erzeugen.

14. Empfänger für ein optisches Nachrichtenübertragungssystem, insbesondere nach einem der Ansprüche 1 bis 12, mit einem optischen Eingangsanschluss (16), einem Freigabesignalausgang und einem Decoder (21, 22, 23, 24) zum Vergleichen eines in einem am Eingangsanschluss (16) anliegenden Prüfsignal enthaltenen Codes mit einem erwarteten Code und Erzeugen des Freigabesignals bei Übereinstimmung der Codes, **dadurch gekennzeichnet, daß** der Empfänger eingerichtet ist das Freigabesignal nur zu erzeugen, wenn zuvor ein für den Empfänger spezifisch codiertes Prüfsignal übertragen worden ist.

15. Verfahren zum Unterdrücken von ungeschützter Emission von Nachrichtensignalen aus Sendern (1) eines optischen Nachrichten verarbeitenden Systems, bei dem jeder Sender (1) mit einem zugeordneten Empfänger (2) über eine Freigabeleitung (15) zum Steuern der Freigabe der Emission verbunden und durch einen optischen Wellenleiter (6) verbindbar ist, mit den Schritten:
a) Ausgeben eines für den zugeordneten Empfänger (2) spezifischen optischen Prüfsignals durch den Sender (1);
b) Überprüfen des Eintreffens des Prüfsignals am Empfänger (2); und
c) wenn festgestellt wird, dass das Prüfsignal am Empfänger (2) eingetroffen ist, Freigeben des Sendens des Nachrichtensignals , wobei die Schritte a) bis c) durchgeführt werden, wenn der Anschluss eines Wellenleiters (6) an den Empfänger (2) erfasst worden ist.

16. Verfahren nach Anspruch 15, **dadurch gekennzeichnet dass** es bei Inbetriebnahme des Systems durchgeführt wird.

17. Verfahren nach Anspruch 15 oder 16 **dadurch gekennzeichnet, dass** vorab eine Beschreibung des Prüfsignals vom Empfänger (2) an den zugeordneten Sender (1) übermittelt wird.

18. Verfahren nach Anspruch 17, **dadurch gekennzeichnet, dass** als Beschreibung eine digitale Zahl übermittelt wird und in Schritt b) das Eintreffen des Prüfsignals festgestellt wird, wenn die gleiche Zahl im Prüfsignal dekodiert wird.

19. Verfahren nach Anspruch 17, **dadurch gekennzeichnet, dass** als Beschreibung ein Signal übermittelt wird, das in bestimmten Zeitabständen Pegelwechsel aufweist, und dass in Schritt b) das Eintreffen des Prüfsignals festgestellt wird, wenn im Prüfsignal Pegelwechsel mit den gleichen Zeitabständen beobachtet werden.

20. Verfahren nach einem der Ansprüche 15 bis 19, **dadurch gekennzeichnet, dass** das Nachrichtensignal kohärent, das Prüfsignal aber inkohärent ist.

## Claims

1. An optical message transmission system with a number of optical transmitters (1) and receivers (2), each of which is fitted with ports (5, 16) for interchangeable waveguides (6), wherein an input (9) is assigned to each optical transmitter (1) for the reception of a enabling signal, and the transmitter (1) is equipped to generate, or not to generate, an optical message signal according to the status of the enabling signal, and a signal transducer (21, 24) is assigned to each optical receiver (2) for the generation of such a enabling signal (***D̅*** = 1), the status of which determines whether the receiver (2) is connected via a waveguide (6) with a transmitter (1) or not,
**characterised in that**
each signal transducer (21, 24) is connected with exactly one enabling input (9) via a enabling control line (15) routed separately from the waveguides (6), and is equipped only to generate the enabling signal (***D̅*** = 1) if previously a test signal specific to the respective receiver (2) has been received at the waveguide port (16) of the latter, and **in that** it includes means (15) for the transmission of a description of the test signal specific to a receiver (2) to the assigned transmitter (1).

2. The optical message transmission system according to Claim 1, **characterised in that** to each receiver (2) is assigned a store (23) for the description of its test signal.

3. The optical message transmission system according to Claim 1, **characterised in that** to each receiver (2) is assigned a random generator (26) for the randomly controlled generation of the description of its test signal.

4. The optical message transmission system according to Claim 1, **characterised in that** it includes a central entity (27) for the assignment to each receiver of a test signal description specific to each receiver (2).

5. The optical message transmission system according to one of the Claims 1 to 4, **characterised in that** the means for the transmission of a description of the test signal is the enabling control line (15).

6. The optical message transmission system according to Claim 5, **characterised in that** the enabling control line can assume exactly two levels.

7. The optical message transmission system according to one of the Claims 1 to 6, **characterised in that** the test signal can be described by means of a digital number.

8. The optical message transmission system according to Claim 7, **characterised in that** the transmitter (1) has a coder (11, 4) for the coding of the digital number into the test signal, and the receiver (2) has a decoder (20, 21) for the extraction of the number coded in the test signal.

9. The optical message transmission system according to one of the Claims 1 to 5, **characterised in that** the test signal can be described by means of at least one point in time, at which it changes its level.

10. The optical message transmission system according to one of the preceding claims, **characterised in that** each transmitter (1) transmits the test signal at a lower average power than the message signal.

11. The optical message transmission system according to one of the preceding claims, **characterised in that** each transmitter (1) has a laser (3) and an amplifier (4) inserted between the laser (3) and the waveguide port (5) of the transmitter (1), and **in that** the laser can be operated only in the presence of the enabling signal (***D̅*** = 1).

12. The optical message transmission system according to one of the preceding claims, **characterised in that** the transmitter (1) and receiver (2) are attached to a circuit board mounted on a backplane, and **in that** the enabling lines (15) are routed via the backplane.

13. A transmitter for an optical message transmission system, in particular according to one of the preceding claims, with an optical output port (5), an enabling signal input (9) and a radiation source (3, 4) that can be modulated for the delivery of an optical message signal to the optical output port (5) if an enabling signal (*D̅* = 1) is present at the enabling signal input (9) of the transmitter (1), wherein the radiation source (3, 4) is in a position to output a coded optical test signal to the output port (5) if the enabling signal (***D̅*** = 1) is not present, **characterised in that** the radiation source is in a position to generate a coded optical signal, specific to an assigned receiver, according to a description transmitted to the transmitter.

14. A receiver for an optical message transmission system, in particular according to one of the Claims 1 to 12, with an optical input port (16), an enabling signal output and a decoder (21, 22, 23, 24) for purposes of comparing a code contained in a test signal present at the input port (16) with an anticipated code, and generating an enabling signal in the event that the codes are in agreement, **characterised in that** the receiver is equipped to generate the enabling signal only if a test signal specifically coded for the receiver has previously been transmitted.

15. A method for the suppression of unscreened emission of message signals from transmitters (1) of a system processing optical messages, in which each transmitter (1) is connected with an assigned receiver (2) via an enabling line (15) for purposes of controlling the enabling of the emission, and can be connected via an optical waveguide (6) with the steps:
a) output of an optical test signal specific to the assigned receiver (2) by the transmitter (1);
b) monitoring of the arrival of the test signal at the receiver (2), and
c) if it is established that the test signal has arrived at the receiver (2), enabling of the transmission of the message signal, wherein the steps a) to c) are executed, if the connection of a waveguide (6) to the receiver (2) has been registered.

16. The method according to Claim 15, **characterised in that** it is executed in the event of bringing the system into operation.

17. The method according to Claim 15 or 16, **characterised in that** a description of the test signal is transmitted in advance from the receiver (2) to the assigned transmitter (1).

18. The method according to Claim 17, **characterised in that** a digital number is transferred as a description and in step b) the arrival of the test signal is established if the same number is decoded from the test signal.

19. The method according to Claim 17, **characterised in that** as a description a signal is transferred that has a change of level at particular time intervals, and **in that** in step b) the arrival of the test signal is established if a change of level is observed at the same time intervals.

20. The method according to one of the Claims 15 to 19, **characterised in that** the message signal is coherent, but the test signal is incoherent.

## Revendications

1. Système de communication optique comportant une pluralité d'émetteurs (1) et de récepteurs (2) optiques, qui sont respectivement équipés de raccords (5, 16) prévus pour des guides d'ondes (6) pouvant être intervertis, dans lequel une entrée (9) pour la réception d'un signal de libération est coordonnée à chaque émetteur (1) optique et l'émetteur (1) est conçu afin de générer ou ne pas générer un signal d'information optique en fonction du statut du signal de libération, et un générateur de signaux (21, 24) pour générer un tel signal de libération (***D̅***=1) est coordonné à chaque récepteur (2) optique, signal dont le statut indique si le récepteur (2) est relié ou n'est pas relié via un guide d'ondes (6) à un émetteur (1),
**caractérisé en ce que**
chaque générateur de signaux (21, 24) est relié à exactement une entrée de libération (9) via une ligne de commande de libération (15) insérée séparément à partir des guides d'ondes (6) et est conçu afin de produire le signal de libération (***D̅***=1) seulement quand un signal de contrôle spécifique au récepteur (2) respectif a été préalablement reçu sur le raccord de guide d'onde (16) de celui-ci, et **en ce que** il comprend des moyens (15) pour transmettre une description du signal de contrôle spécifique à un récepteur (2) à l'émetteur (1) coordonné.

2. Système de communication optique selon la revendication 1, **caractérisé en ce que** à chaque récepteur (2) est coordonnée une mémoire (23) prévue pour la description de son signal de contrôle.

3. Système de communication optique selon la revendication 1, **caractérisé en ce que** à chaque récepteur (2) est coordonné un générateur aléatoire (26) pour générer de manière commandée aléatoirement la description de son signal de contrôle.

4. Système de communication optique selon la revendication 1, **caractérisé en ce que** il comprend au niveau de chaque récepteur une instance centrale (27) pour affecter une description de signal de contrôle spécifique à chaque récepteur (2).

5. Système de communication optique selon une des revendications 1 à 4, **caractérisé en ce que** les moyens pour transmettre une description du signal de contrôle est la ligne de commande de libération (15).

6. Système de communication optique selon la revendication 5, **caractérisé en ce que** la ligne de commande de libération peut accepter exactement deux niveaux.

7. Système de communication optique selon une des revendications 1 à 6, **caractérisé en ce que** le signal de contrôle peut être décrit par un chiffre numérique.

8. Système de communication optique selon la revendication 7, **caractérisé en ce que** l'émetteur (1) présente un codeur (11, 4) pour coder le chiffre numérique en le signal de contrôle et le récepteur (2) présente un décodeur (20, 21) pour extraire le chiffre codé dans le signal de contrôle.

9. Système de communication optique selon une des revendications 1 à 5, **caractérisé en ce que** le signal de contrôle peut être décrit par au moins un point temporel, auquel son niveau varie.

10. Système de communication optique selon une des revendications précédentes, **caractérisé en ce que** chaque émetteur (1) émet le signal de contrôle avec une puissance moyenne plus faible en tant que signal d'information.

11. Système de communication optique selon une des revendications précédentes, **caractérisé en ce que** chaque émetteur (1) présente un laser (3) et un amplificateur (4) branché entre le laser (3) et le raccord de guide d'onde (5) de l'émetteur (1), et **en ce que** le laser peut être mis en fonctionnement seulement en présence du signal de libération (***D̅***=1).

12. Système de communication optique selon une des revendications précédentes, **caractérisé en ce que** les émetteurs (1) et les récepteurs (2) sont montés sur des cartes de circuits imprimés montés sur un plan arrière, et **en ce que** les lignes de libération (15) sont insérées via le plan arrière.

13. Emetteur prévu pour un système de communication optique, notamment selon une des revendications précédentes, comportant un raccord de sortie optique (5), une entrée de signal de libération (9) et une source de rayonnement (3, 4) modulable pour délivrer un signal d'information optique au niveau du raccord de sortie optique (5), lorsque un signal de libération (***D̅***=1) est présent au niveau de l'entrée de signal de libération (9) de l'émetteur (1), dans lequel la source de rayonnement (3, 4) est en mesure d'émettre, au cas où le signal de libération (***D̅***=1) n'est pas présent, un signal de contrôle optique codé au niveau du raccord de sortie (5), **caractérisé en ce que** la source de rayonnement est en mesure de générer un signal optique codé, spécifique à un récepteur coordonné conformément à une description transmise à l'émetteur.

14. Récepteur prévu pour un système de communication optique, notamment selon une des revendications 1 à 12, comportant un raccord d'entrée optique (16), une sortie de signal de libération et un décodeur (21, 22, 23, 24) pour comparer un code contenu dans un signal de contrôle présent au niveau du raccord d'entrée (16) avec un code escompté et pour générer le signal de libération en cas de concordance du code, **caractérisé en ce que l**e récepteur est conçu afin de générer le signal de libération seulement quand un signal de contrôle codé spécifique au récepteur a été préalablement transmis.

15. Procédé pour éviter la transmission non protégée de signaux d'information à partir d'émetteurs (1) d'un système traitant des informations optiques, dans lequel chaque émetteur (1) est relié à un récepteur (2) coordonné via une ligne de libération (15) pour commander la libération de l'émission et peut être relié via un guide d'onde (6) optique, comportant les étapes consistant à :
a) émettre par l'émetteur (1) un signal de contrôle optique spécifique au récepteur (2) coordonné ;
b) contrôler l'arrivée du signal de contrôle au niveau du récepteur (2) ; et
c) lorsqu'il est constaté que le signal de contrôle est arrivé au niveau du récepteur (2), libérer l'émission du signal d'information, dans lequel les étapes a) à c) sont exécutées lorsque le raccord d'un guide d'onde (6) a été détecté au niveau du récepteur (2).

16. Procédé selon la revendication 15, **caractérisé en ce que** il est mis en oeuvre lors de la mise en service du système.

17. Procédé selon la revendication 15 ou 16, **caractérisé en ce que** une description du signal de contrôle a été transmise au préalable du récepteur (2) à l'émetteur (1) coordonné.

18. Procédé selon la revendication 17, **caractérisé en ce que** un chiffre numérique est transmis en tant que description et à l'étape b) l'arrivée du signal de contrôle est constatée, quand le même chiffre est décodé dans le signal de contrôle.

19. Procédé selon la revendication 17, **caractérisé en ce que** un signal est transmis en tant que description, lequel présente une variation de niveau à des intervalles de temps déterminés, et **en ce que** à l'étape b) l'arrivée du signal de contrôle est constatée, quand une variation de niveau est observée dans le signal de contrôle aux mêmes intervalles de temps.

20. Procédé selon une des revendications 15 à 19, **caractérisé en ce que** le signal d'information est cohérent, mais le signal de contrôle est incohérent.
